# EUROPÄISCHE PATENTSCHRIFT

(11) **EP 3 024 716 B1**
(45) Veröffentlichungstag und Bekanntmachung des Hinweises auf die Patenterteilung: **26.02.2020**
(21) Anmeldenummer: 14739133.8
(22) Anmeldetag: 10.07.2014
(51) Int. Cl.: B62K 19/08, B21D 53/86

(54) **BAUGRUPPE FÜR EIN ZWEIRAD, TRIKE ODER QUAD**
ASSEMBLY FOR A TWO-WHEELER, THREE-WHEELER OR ATV
ENSEMBLE POUR UN DEUX-ROUES, TROIS-ROUES OU QUAD

(30) Priorität: 25.07.2013 DE 102013214588
(43) Veröffentlichungstag der Anmeldung: 01.06.2016
(73) Patentinhaber: Bayerische Motoren Werke Aktiengesellschaft, 80809 München (DE)
(72) Erfinder: PLATZ, Christoph, 85716 Unterschleißheim (DE)
(86) Internationale Anmeldenummer: PCT/EP2014/064856
(87) Internationale Veröffentlichungsnummer: WO 2015/010917

(56) Entgegenhaltungen:
- DE-A1-102008 011 851
- DE-C- 400 470
- FR-A- 1 160 860
- GB-A- 194 801
- JP-A- 2005 219 742
- JP-A- 2013 039 900
- US-A1- 2006 000 655

## Beschreibung

Die Erfindung betrifft eine Baugruppe für ein Zweirad, Trike oder Quad, insbesondere für ein Motorrad oder einen Motorroller, mit einem Lenkkopf und wenigstens einem Profilteil, das den Lenkkopf mit einem tragenden Teil des Zweirads, Trikes oder Quads verbindet.

Bei den genannten Fahrzeugen ist im Lenkkopf (auch Steuerkopf genannt) die Gabel bzw. das Lenkungsrohr geführt und drehbar gelagert. Der Lenkkopf ist ein hoch belastetes Teil des Fahrgestells, das stabil und präzise gearbeitet sein muss, nicht zuletzt weil es sich um ein sicherheitsrelevantes Bauteil handelt.

Üblicherweise wird der Lenkkopf aus einem Stahlrohr gefertigt, er kann aber auch aus Drehteilen zusammengebaut oder gegossen sein. Die Befestigung des Lenkkopfes erfolgt meistens mit angeschweißten Profilen aus Stahl oder Aluminium, welche zusammen den Rahmen des Fahrzeugs bilden, oder in einem gemeinsamen Gussbauteil.

Nachteilig bei solchen Baugruppen ist das schlechte Verhältnis zwischen Gewicht und Struktursteifigkeit, d. h. eine ausreichende Struktursteifigkeit ist nur mit einer relativ schweren Baugruppe zu erreichen.

Motorräder oder andere Zweiräder, bei denen an den Lenkkopf ein umgeformtes Blechteil anschließt, sind beispielsweise aus GB 194 801 A, FR 1 160 860 A, DE 400 470 C und JP 2005 219742 A bekannt.

Elektrische Motorräder oder andere Zweiräder mit einer Baugruppe der eingangs genannten Art sind beispielsweise aus DE 10 2008 011851 A1, JP 2013 039900 A und US 2006/000655 A1 bekannt.

Aufgabe der Erfindung ist es, eine Baugruppe der eingangs genannten Art zu verbessern.

Gelöst wird diese Aufgabe durch eine Baugruppe mit den Merkmalen des Anspruchs 1. Vorteilhafte und zweckmäßige Ausgestaltungen der erfindungsgemäßen Baugruppe sind in den Unteransprüchen angegeben.

Die erfindungsgemäße Baugruppe für ein Zweirad, Trike oder Quad, insbesondere für ein Motorrad oder einen Motorroller, umfasst einen Lenkkopf und wenigstens ein Profilteil, das den Lenkkopf mit einem tragenden Teil des Zweirads verbindet. Gemäß der Erfindung ist das Profilteil der Baugruppe aus einem umgeformten Blech gebildet. Das Profilteil der erfindungsgemäßen Baugruppe bildet zwei Seitenwände eines Batteriekastens, oder zwei Profilteile der erfindungsgemäßen Baugruppe bilden zwei Seitenwände eines Batteriekastens. Das tragende Teil hat einen C-förmigen Querschnitt und bildet zusammen mit den Seitenwänden einen einseitig offenen Batteriekasten.

Die Erfindung beruht auf der Erkenntnis, dass durch die Verwendung eines Blechteils Gewicht eingespart werden kann. Voraussetzung für den Einsatz eines Blechteils anstelle von bislang üblichen Stahlrohren ist eine vergleichbare Struktursteifigkeit. Diese kann durch ein verhältnismäßig großes Querschnittsprofil erreicht werden.

Umgekehrt kann durch die erfindungsgemäße Strukturleichtbauweise bei gleichem Gewicht eine größere Steifigkeit als mit einem Stahlrohr erreicht werden.

Ein weiterer wesentlicher Vorteil der Erfindung ist darin zu sehen, dass sich Blech einfacher verarbeiten lässt als Rohre oder gegossene Bauteile, sodass die erfindungsgemäße Fertigungstechnologie auch zu einer Kostenersparnis führt.

Bei der bevorzugten Ausführungsform der Baugruppe ist vorgesehen, dass das Profilteil aus einer geschnittenen Blechplatte gekantet ist. Auf ein aufwendiges Tiefziehen kann in diesem Fall verzichtet werden.

Der Lenkkopf ist dagegen vorzugsweise ein Gussteil.

Der Lenkkopf kann am besten mittels einer Schweißverbindung am Profilteil befestigt werden. Grundsätzlich ist aber auch eine Klebeverbindung oder eine Schraubverbindung zwischen dem Profilteil und dem Lenkkopf möglich.

Genauso kann zwischen dem Profilteil und dem tragenden Teil des Fahrzeugs eine Schweißverbindung, eine Klebeverbindung oder eine Schraubverbindung vorgesehen sein.

Als Material für das Profilteil eignet sich insbesondere Aluminium, da sich ein Aluminiumblech gut verarbeiten lässt und sich der Werkstoff im Fahrzeugbau bewährt hat.

Auch der Lenkkopf kann im Wesentlichen aus Aluminium bestehen, ebenso wie das tragende Teil, an dem das Profilteil mit dem Lenkkopf befestigt wird.

Gemäß einer bevorzugten Ausführungsform der Erfindung sind zwei symmetrische Profilteile am Lenkkopf aneinandergesetzt und bilden zusammen einen Rahmenabschnitt. Zwei Profilteile, die bei der Montage aneinandergesetzt werden, sind in der Regel leichter zu handhaben als ein entsprechendes einteiliges Profilteil.

Gemäß der Erfindung bildet das Profilteil bzw. bilden die Profilteile gleichzeitig die Seitenwand eines Batteriekastens. Das bedeutet, dass das Profilteil bzw. die Profilteile einstückig mit der Seitenwand ausgebildet ist bzw. sind. Idealerweise werden das Profilteil bzw. die Profilteile und die Seitenwand aus demselben Blech geformt.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine erste perspektivische Ansicht einer erfindungsgemäßen Baugruppe;
- Figur 2 eine zweite perspektivische Ansicht der Baugruppe aus Figur 1; und
- Figur 3 eine perspektivische Ansicht eines Zweirads mit der Baugruppe aus Figur 1.

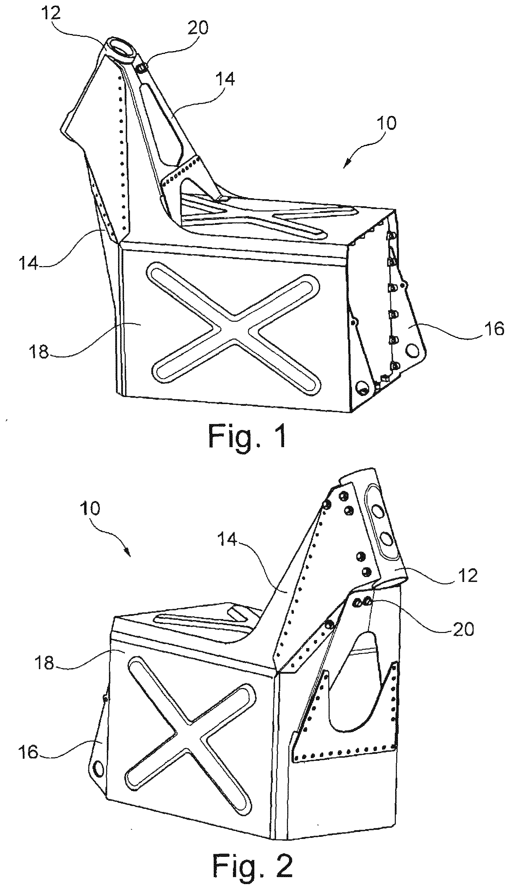

In den Figuren 1 und 2 ist eine Baugruppe 10 für ein Zweirad, Trike oder Quad, insbesondere für ein Motorrad oder einen Motorroller gezeigt. Die Baugruppe 10 besteht im Wesentlichen aus einem Lenkkopf 12, zwei Profilteilen 14 und einem tragenden Teil 16, das hier ein Teil eines Batteriekastens des Fahrzeugs ist. Anders als in den Figuren dargestellt kann anstelle von zwei am Lenkkopf 12 aneinandergesetzten Profilteilen 14, die zusammen einen Rahmenabschnitt bilden, auch nur ein einziges (einstückiges) Profilteil vorgesehen sein, das entsprechend den beiden aneinandergesetzten Profilteilen 14 geformt ist.

Die Profilteile 14 verbinden den Lenkkopf 12 mit dem tragenden Teil 16. Im dargestellten Ausführungsbeispiel sind zwei symmetrische Profilteile 14 vorgesehen, die gleichzeitig jeweils eine Seitenwand 18 des Batteriekastens bilden, d. h. die Profilteile 14 sind einteilig mit den Seitenwänden 18 ausgebildet. Das tragende Teil 16 hat hier einen C-förmigen Querschnitt, sodass das tragende Teil 16 zusammen mit den Seitenwänden 18 einen einseitig offenen Batteriekasten bildet.

Ebenso wie der hohle Lenkkopf 12 und das tragende Teil 16 bestehen die Profilteile 14 im Wesentlichen aus Aluminium. Der Lenkkopf 12 ist ein Gussteil; die Profilteile 14 sind hingegen aus einem umgeformten Blech gebildet. Genauer gesagt ist jedes Profilteil 14 aus einer geschnittenen Blechplatte gekantet. In einer anderen Ausführungsform sind die Profilteile 14 aus einem tiefgezogenen Blech gebildet. Entsprechendes gilt hier für das tragende Teil 16.

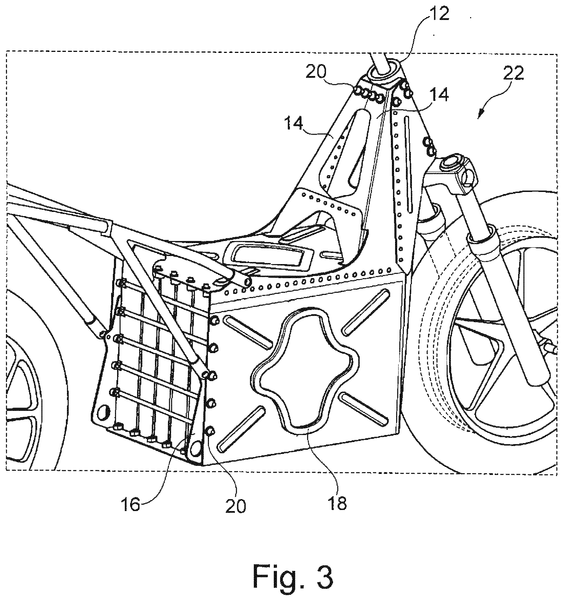

In den Figuren 1 und 2 sind bei einem der beiden Profilteile 14 (in Figur 1 hinten bzw. in Figur 2 vorne) Schrauben 20 einer Schraubverbindung zwischen dem Profilteil 14 und dem Lenkkopf 12 zu erkennen. Aus Figur 3, die die Baugruppe 10 bei Verwendung am Beispiel eines Motorrads 22 zeigt, geht hervor, dass die Profilteile 14, genauer gesagt die Seitenwände 18, auch an das tragende Teil 16 geschraubt sind. Anstelle der Schraubverbindungen können selbstverständlich auch Nietverbindungen vorgesehen sein. Ebenso ist es grundsätzlich möglich, die Profilteile 14 mit dem Lenkkopf 12 und/oder mit dem tragenden Teil 16n durch Schweißen oder Kleben zu verbinden.

Die Profilteile 14 haben oder ergeben zusammen im Vergleich zu herkömmlichen Verbindungsteilen einen sehr großen Querschnitt, der die nötige Stabilität verleiht. Die jeweils aus einem Blech gebildeten Profilteile 14 haben somit die gleiche Struktursteifigkeit wie ein viel schwereres Verbindungsteil aus Stahl. Dennoch können zusätzlich weitere Verstärkungsbleche vorgesehen sein, um die Stabilität weiter zu erhöhen.

Die Wandstärke des für die Profilteile 14 verwendeten Aluminiumblechs beträgt etwa 1 bis 2,5 mm. Im Vergleich zu einem herkömmlichen Frontrahmen aus Stahlrohren ergibt sich eine erhebliche Gewichtsersparnis bei gleicher oder sogar besserer Steifigkeit.

### Bezugszeichenliste

- 10: Baugruppe
- 12: Lenkkopf
- 14: Profilteil
- 16: tragendes Teil
- 18: Seitenwand
- 20: Schrauben
- 22: Motorrad

## Patentansprüche

1. Baugruppe (10) für ein Zweirad, Trike oder Quad, mit einem Lenkkopf (12) und wenigstens einem Profilteil (14), das den Lenkkopf (12) mit einem tragenden Teil (16) des Zweirads, Trikes oder Quads verbindet, wobei das Profilteil (14) aus einem umgeformten Blech gebildet ist, wobei ein einziges des wenigstens einen Profilteils (14) zwei Seitenwände (18) eines Batteriekastens bildet oder zwei der Profilteile (14) zwei Seitenwände (18) eines Batteriekastens bilden, wobei das tragende Teil (16) einen C-förmigen Querschnitt hat **dadurch gekennzeichnet, dass** das tragende Teil (16) zusammen mit den Seitenwänden (18) einen einseitig offenen Batteriekasten bildet.

2. Baugruppe (10) nach Anspruch 1, **dadurch gekennzeichnet, dass** das wenigstens eine Profilteil (14) aus einer geschnittenen Blechplatte gekantet ist.

3. Baugruppe (10) nach einem der vorhergehenden Ansprüche, **dadurch gekennzeichnet, dass** der Lenkkopf (12) ein Gussteil ist.

4. Baugruppe (10) nach einem der vorhergehenden Ansprüche, **gekennzeichnet durch** eine Schraubverbindung, Nietverbindung, Schweißverbindung oder Klebeverbindung zwischen dem wenigstens einen Profilteil (14) und dem Lenkkopf (12).

5. Baugruppe (10) nach einem der vorhergehenden Ansprüche, **gekennzeichnet durch** eine Schraubverbindung, Nietverbindung, Schweißverbindung oder Klebeverbindung zwischen dem wenigstens einen Profilteil (14) und dem tragenden Teil (16).

6. Baugruppe (10) nach einem der vorhergehenden Ansprüche, **dadurch gekennzeichnet, dass** das wenigstens eine Profilteil (14) im Wesentlichen aus Aluminium besteht.

7. Baugruppe (10) nach einem der vorhergehenden Ansprüche, **dadurch gekennzeichnet, dass** der Lenkkopf (12) im Wesentlichen aus Aluminium besteht.

8. Baugruppe (10) nach einem der vorhergehenden Ansprüche, **dadurch gekennzeichnet, dass** das tragende Teil (16) im Wesentlichen aus Aluminium besteht.

9. Baugruppe (10) nach einem der vorhergehenden Ansprüche, **dadurch gekennzeichnet, dass** zwei symmetrische Profilteile (14) am Lenkkopf (12) aneinandergesetzt sind und zusammen einen Rahmenabschnitt bilden.

## Claims

1. An assembly (10) for a two-wheeled vehicle, trike or quad bike, with a steering head (12) and at least one profile part (14) which connects the steering head (12) to a supporting part (16) of the two-wheeled vehicle, trike or quad bike, wherein the profile part (14) is formed from a shaped metal sheet, wherein a single one of the at least one profile part (14) forms two side walls (18) of a battery compartment or two of the profile parts (14) form two side walls (18) of a battery compartment, wherein the supporting part (16) has a C-shaped cross-section, **characterised in that** the supporting part (16) together with the side walls (18) forms a battery compartment which is open on one side.

2. An assembly (10) according to Claim 1, **characterised in that** the at least one profile part (14) is cut from a cut sheet-metal plate.

3. An assembly (10) according to one of the preceding claims, **characterised in that** the steering head (12) is a cast part.

4. An assembly (10) according to one of the preceding claims, **characterised by** a screw connection, riveted connection, welded connection or adhesive connection between the at least one profile part (14) and the steering head (12).

5. An assembly (10) according to one of the preceding claims, **characterised by** a screw connection, riveted connection, welded connection or adhesive connection between the at least one profile part (14) and the supporting part (16).

6. An assembly (10) according to one of the preceding claims, **characterised in that** the at least one profile part (14) comprises substantially aluminium.

7. An assembly (10) according to one of the preceding claims, **characterised in that** the steering head (12) comprises substantially aluminium.

8. An assembly (10) according to one of the preceding claims, **characterised in that** the supporting part (16) comprises substantially aluminium.

9. An assembly (10) according to one of the preceding claims, **characterised in that** two symmetrical profile parts (14) are placed against one another on the steering head (12) and together form a frame portion.

## Revendications

1. Structure (10) destinée à un deux roues, à un trike ou à un quad comportant une tête de direction (12) et au moins une pièce profilée (14) qui relie la tête de direction (12) à une pièce portante (16) du deux-roues du trike ou du quad, la pièce profilée (14) étant réalisée en une tôle mise en forme, une seule pièce profilée (14) formant deux parois latérales (18) d'un caisson de batterie ou deux pièces profilées (14) formant deux parois latérales (18) d'un caisson de batterie, la pièce portante (16) ayant une section en forme de C,
**caractérisée en ce que**
la pièce portante (16) forme conjointement avec les parois latérales (18) un caisson de batterie ouvert d'un côté.

2. Structure (10) conforme à la revendication 1,
**caractérisée en ce que**
la pièce profilée (14) est repliée à partir d'une plaque en tôle découpée.

3. Structure (10) conforme à l'une des revendications précédentes,
**caractérisée en ce que**
la tête de direction (12) est une pièce en fonte.

4. Structure (10) conforme à l'une des revendications précédentes,
**caractérisée par**
une liaison vissée, une liaison rivetée, une liaison soudée ou une liaison par adhésif entre la pièce profilée (14) et la tête de direction (12).

5. Structure (10) conforme à l'une des revendications précédentes,
**caractérisée par**
une liaison vissée, une liaison rivetée, une liaison soudée ou une liaison par adhésif entre la pièce profilée (14) et la pièce portante (16).

6. Structure (10) conforme à l'une des revendications précédentes,
**caractérisée en ce que**
la pièce profilée (14) est essentiellement réalisée en aluminium.

7. Structure (10) conforme à l'une des revendications précédentes,
**caractérisée en ce que**
la tête de direction (12) est essentiellement réalisée en aluminium.

8. Structure (10) conforme à l'une des revendications précédentes,
**caractérisée en ce que**
la pièce portante (16) est essentiellement réalisée en aluminium.

9. Structure (10) conforme à l'une des revendications précédentes,
**caractérisée en ce que**
deux pièces profilées symétriques (14) sont assemblées sur la tête de direction (12) et forment ensemble un segment de cadre.
